# EUROPEAN PATENT SPECIFICATION

(11) **EP 2 266 251 B1**
(45) Date of publication and mention of the grant of the patent: **29.02.2012**
(21) Application number: 09725571.5
(22) Date of filing: 24.03.2009
(51) Int. Cl.: H04L 9/08, H04L 29/06, H04W 12/04

(54) **EFFICIENT MULTIPARTY KEY EXCHANGE**
EFFIZIENTER MEHRTEILNEHMER-SCHLÜSSELAUSTAUSCH
ÉCHANGE EFFICACE DE CLÉ ENTRE PLUSIEURS PARTIES

(30) Priority: 25.03.2008 US 79313
(43) Date of publication of application: 29.12.2010
(73) Proprietor: Ericsson AB, 164 80 Stockholm (SE)
(72) Inventor: HUBER, Rich, Harmony PA 16037 (US); PUNJ, Arun, Cranberry Township PA 16066 (US); SMITH, Gregory, Pittsburgh PA 15206 (US)
(74) Representative: Siegert, Georg
(86) International application number: PCT/IB2009/000586
(87) International publication number: WO 2009/118606

(56) References cited:
- WO-A1-00/48357
- US-A1- 2005 254 656
- US-B1- 6 941 457
- WING CISCO SYSTEMS D: "Datagram TLS Secure RTP (DTLS-SRTP) Key Transport; draft-wing-avt-dtls-srtp-key-transport-01. txt" IETF STANDARD-WORKING-DRAFT, INTERNET ENGINEERING TASK FORCE, IETF, CH, no. 1, 15 February 2008 (2008-02-15), XP015054765 ISSN: 0000-0004

## Description

### TECHNICAL FIELD

The present invention is related to the formation of a secure session by transfer of keys to parties or nodes of the session. (As used herein, references to the "present invention" or "invention" relate to exemplary embodiments and not necessarily to every embodiment encompassed by the appended claims.) More specifically, the present invention is related to the formation of a secure session by transfer of keys to parties or nodes of the session where a master key is distributed to a new party or new node using only a single signaling message to each of the parties and the new party without any other signaling messages to establish secure communications between the new party and each of the parties in the session.

### BACKGROUND

This section is intended to introduce the reader to various aspects of the art that may be related to various aspects of the present invention. The following discussion is intended to provide information to facilitate a better understanding of the present invention. Accordingly, it should be understood that statements in the following discussion are to be read in this light, and not as admissions of prior art.

This invention provides a mechanism to exchange cryptographic security keys between multiple participants in a multiparty multimedia session. There are two primary ways to secure multimedia streams between multiple participants.

The first and easiest way is to create a single 'private' key and distribute this key to each participant. This single key is then used by all participants to encrypt their own transmitted media streams. This same key is also used by each participant to decrypt each received media stream. Although this would seem to be a fine way to encrypt and decrypt media streams, it has a very large flaw. That flaw is the large number of available media packets that all use the same cryptographic key. This makes it easy for an attacker to capture all of the messages and 'crack' this single key. Once the attacker has this single key, 'all' media streams coming from every participant is completely visible. As the number of participants and/or streams increases so does the ease of cracking since the total number of available media packets also increases.

The second way, using multiple keys to encrypt media streams, is for every participant to create a unique cryptographic key for each transmitted media stream. The key distribution task is now much bigger, since each and every participant needs to distribute their unique keys to every other participant. When a participant receives a multimedia stream it must decrypt this stream using each sender's unique key. However, this multiple key approach does make the captured stream attack much harder since the attacker can only examine a single media stream to attempt to 'crack' the key. This requires much more elapsed time to gather enough media stream packets to even attempt cracking the key. Even if the attacker could find a single key, they would 'only' be able to decrypt that single media stream. All of the other streams from every other participant would still be protected.

There are several reasons that a multiparty session would need to change security keys. One of the obvious reasons is when one of the participants leaves the session. In this case the keys would need to be changed to prevent the disconnected participant from capturing media streams and using the old keys to eavesdrop on future media streams. The other similar case is when a new participant is added to the session. In this case, if they had captured media streams prior to joining the session, they would be able to use the old encryption keys to decrypt all of the previous media streams. So, basically all keys must be changed when a participant is added or removed from a multiparty session. One of the other reasons to change a key is to prevent long lasting media sessions from being cracked. This is generally handled by a periodic key exchange depending on how many media stream packets were encrypted using the same key.

The primary remaining issue is *how to exchange keys.* Since the keys will need to be changed though the life of the session, the multiparty key exchange is very important. The number of signaling messages that are required to handle the multiple key method of encryption can be quite large. Another factor to consider is the computational requirements to generate each cryptographic key. Each participant that has 'M' transmitting media streams would need to generate 'M' cryptographic keys. If there are 'N' participants in the multimedia session, then each participant would need to send 'N-1' signaling messages to tell every other participant their unique media stream keys. To summarize, every time the keys need to be changed; 'M' * 'N' cryptographic keys need to be generated AND at least 'N' * ('N'- 1) signaling messages need to be sent. If these signaling messages are sent via a SIP or IMS network, then multiple SIP proxy servers can each need to be involved in these signaling messages. The problems with existing solutions are weak encryption, very high signaling overhead and computational load during key generation.

This invention is designed to reduce the load from all of the cryptographic key generations AND to dramatically reduce the number of signaling messages.

### SUMMARY

The present invention pertains to a system for providing secure communications. The system comprises a telecommunications network. The system comprises N nodes and a new node in communication with the network to form a session, where N is greater than or equal to three and is an integer. Each node has media streams, and a unique cryptographic media key for each media stream which each node sends to every other node of the session over the telecommunications network. One of the N nodes is a key master which distributes a master key to every other node in the session over the network. Each node encrypts with its own respective media key and the master key each of its media streams. When the new node first joins the session, the new node sends its unique cryptographic media keys for each of its media streams to the N nodes of the session. The key master then generates a new master key with the media keys of the new node and distributes the new master key to the new node and the N nodes using only a single signaling message to each of the N nodes and the new node without any other signaling messages to establish secure communications between the new node and the N nodes in the session.

The present invention pertains to a method for providing secure communications. The method comprises the steps of sending a unique cryptographic media key by each party of N parties, where N is greater than or equal to three and is an integer, for each media stream of each party to every other party of a session over a telecommunications network. There is the step of distributing a master key to each party in the session. There is the step of encrypting by each party with its own respective media key and the master key each of its media streams. There is the step of sending by each party its encrypted media streams to the other parties. There is the step of adding a new party to the session. There is the step of sending by the new party its unique cryptographic media keys for each of its media streams to the other parties of the session. There is the step of generating a new master key with the media keys of the new party. There is the step of distributing the new master key to the new party and the N parties using only a single signaling message to each of the N parties and the new party without any other signaling messages to establish secure communications between the new party and the N parties in the session.

### BRIEF DESCRIPTION OF THE DRAWING

In the accompanying drawing, the preferred embodiment of the invention and preferred methods of practicing the invention are illustrated in which:

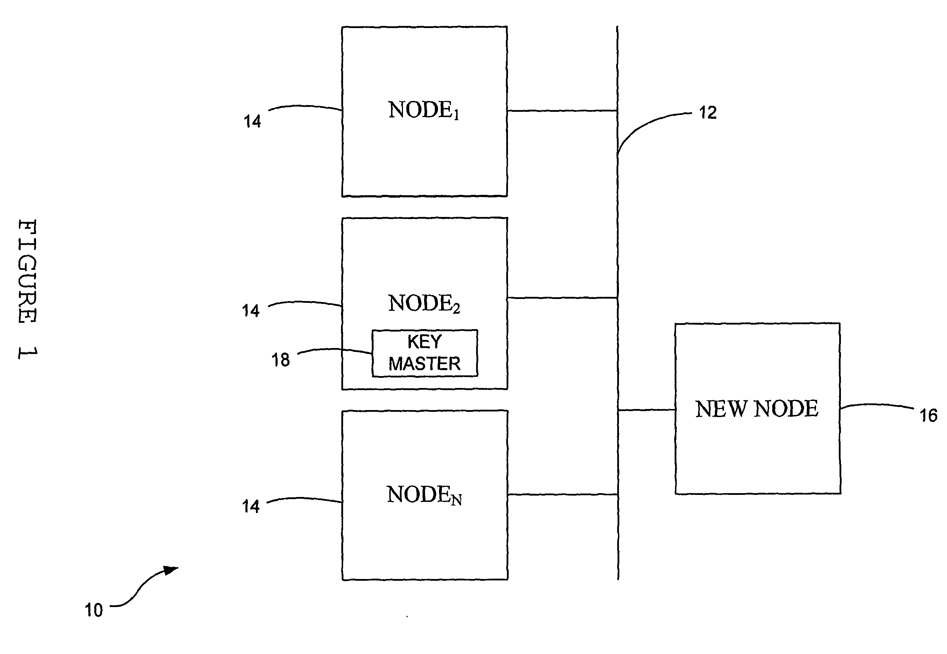

Figure 1 is a block diagram of the system of the present invention.

### DETAILED DESCRIPTION

Referring now to the drawings wherein like reference numerals refer to similar or identical parts throughout the several views, and more specifically to figure 1 thereof, there is shown a system 10 for providing secure communications. The system 10 comprises a telecommunications network 12. The system 10 comprises N nodes 14 and a new node 16 in communication with the network 12 to form a session, where N is greater than or equal to three and is an integer. Each node has media streams, and a unique cryptographic media key for each media stream which each node sends to every other node of the session over the telecommunications network 12. One of the N nodes 14 is a key master 18 which distributes a master key to every other node in the session over the network 12. Each node encrypts with its own respective media key and the master key each of its media streams. When the new node 16 first joins the session, the new node 16 sends its unique cryptographic media keys for each of its media streams to the N nodes 14 of the session. The key master 18 then generates a new master key with the media keys of the new node 16 and distributes the new master key to the new node 16 and the N nodes 14 using only a single signaling message to each of the N nodes 14 and the new node 16 without any other signaling messages to establish secure communications between the new node 16 and the N nodes 14 in the session.

Preferably, each node encrypts with its own respective media key and the new master key each of its media streams after the new node 16 first joins the session and sends its encrypted media streams using the new master key to the other nodes 14. The key master 18 preferably generates the master key and the new master key.

The present invention pertains to a method for providing secure communications. The method comprises the steps of sending a unique cryptographic media key by each party of N parties, where N is greater than or equal to three and is an integer, for each media stream of each party to every other party of a session over a telecommunications network 12. There is the step of distributing a master key to each party in the session. There is the step of encrypting by each party with its own respective media key and the master key each of its media streams. There is the step of sending by each party its encrypted media streams to the other parties. There is the step of adding a new party to the session. There is the step of sending by the new party its unique cryptographic media keys for each of its media streams to the other parties of the session. There is the step of generating a new master key with the media keys of the new party. There is the step of distributing the new master key to the new party and the N parties using only a single signaling message to each of the N parties and the new party without any other signaling messages to establish secure communications between the new party and the N parties in the session.

Preferably, there is the step of encrypting by each party with its own respective media key and the new master key each of its media streams. There is preferably the step of sending by each party its encrypted media streams using the new master key to the other parties. Preferably, there is the step of designating one of the N parties as a key master 18.

There is preferably the step of generating the master key by the key master 18. Preferably, the generating the new master key step includes the step of generating the new master key by the key master 18. There is preferably the step of disconnecting one of the N parties from the session so the new party and N -1 of the N parties remain in the session. Preferably, there is the step of generating another new master key by the key master 18.

There is preferably the step of distributing another new master key to the new party and the N - 1 parties. Preferably, there is the step of encrypting by each of the new party and the N -1 parties with their own respective media key and the another new master key each of their media streams. There is preferably the step of sending by each of the new party and the N -1 parties their respective encrypted media streams using the another new master key, to each other.

In the operation of the invention, at least one 'session' specific cryptographic key is generated that is combined with a 'participant stream' specific cryptographic key. Since it is the combination of the session and participant keys that is used when encrypting media streams, it requires all of the keys to successfully decrypt any stream. The encryption context for all streams within this session is changed just by changing and distributing any of the 'session' specific keys. Additional PKI based key protection schemes can be used on just the 'session' keys to provide an additional layer of end-to-end security.

When a new party is added to a session it must generate unique cryptographic keys for each media stream that it will transmit. These unique keys must be sent to all existing participants in the multimedia session. One of the participants in the multiparty session is called the 'key-master'. Usually this is the initiator of the session, but it really can be any participant. Since a new party is being added to the multiparty session, the conference 'key-master' will also need to generate a new 'session' key. The key-master will then distribute this new session key to all participants including the new participant. Once a participant has its own media stream key and the new session key it can begin to encrypt its outgoing media streams. A participant can also use the combination of the new session key and the other participant's stream keys to decrypt the incoming streams from each of the other participants.

One of the ways that the combination of multiple cryptographic keys can be used is by adding or XORing the keys to form the new "master key". This new 'master key' can be used in any media encryption process which requires a unique key.

The use of a single session key as described above does not preclude the use of any other additional 'session' or 'global' cryptographic keys that can be combined in a similar way.

A possible use of this 'combined' master key is that it can be used in place of the single SRTP master key. The "Secure Real-time Transport Protocol" (SRTP) is defined in IETF RFC RFC-3711. The standard method for exchanging SRTP keys is by following RFC-4568 "Security Descriptions for Media Streams" (SDES). This same SDES message can be used to carry the media stream unique keys from each participant while using a separate message to carry the session key. In one implementation, a SIP NOTIFY method is used to carry the "session key separately. This is a small lightweight signaling message which facilitates low overhead signaling to update session keys. This also makes it easy to separately encrypt just this message for additional security.

If desired, an additional layer of protection can be added by using a public/private key pair such as from a Public Key Infrastructure (PKI). The key-master can use a participant's public key to encrypt the session key before sending it to the respective participant. Then each participant will use its own private key to decrypt the session key. This ensures that at least one of the required keys necessary for media encryption/decryption has travelled encrypted end-to-end. This prevents any possible key interception even from a compromised midstream proxy server. This adds a little more computational overhead to the key-master and also requires a reliable method to access each participant's public key.

After establishing a multimedia session the following steps could be used to exchange encryption keys. In this case, assume the 3 participants are labeled 'A', 'B', and 'C'.

The initial key exchange step is one of the standard ways that keys are exchanged.
- A will generate and send its session-key to B and C
- B will generate and send its session-key to A and C
- C will generate and send its session-key to A and B

For this example, assign A the duty of 'key-master'.
- A will generate a new 'master-key' and send it to all other participants (B and C)
NOTE: Each participant will begin to use the new 'master-key' as soon as it receives it.

At this point, all parties have each other's 'session-keys' and they also have the 'master-key'. The media streams are encrypted and decrypted using the combination of the master-key with each other's session-keys.
1) These are the steps to ADD a new participant 'D' to the session.
   - A invites D into the session
   - D will generate and send its session-key to A, B and C
   - A sends D the session keys from A, B, and C
   - A will generate a new 'master-key' and send it to B, C and D
2) These are the steps to DELETE participant 'D' from the session.
   - D disconnects from the session - A will generate a new 'master-key' and send it to B and C
3) These are the steps used to periodically change the cryptographic key used in the session.
   - A will generate a new 'master-key' and send it to all other participants

This example used in participants, but is equally applicable to essentially any number of participants in a session, be it 4 or 40.

### Definitions:

"Session" - This can be a ViPr conference call or any multimedia application involving 3 or more parties.

"Session-key" - This is the standard cryptographic key that all participants generate and use today. (Same as media-stream-key).

"Master-key" - This is a single key that all participants will combine with other 'session-keys' to form the true cryptographic key.

"Key-master'" - This is a 'role' that one of the 'session' participants assumes to generate and distribute the 'master keys'.

The following is the basis for practicing the above.

The "Session Initiation Protocol" (SIP) is described in the IETF RFC-3261. This is the underlying protocol used in almost all of the world's "Voice Over Internet Protocol", or VoIP phones. This protocol was designed to completely replace the old PSTN phone system with an easily extensible framework that used the vast Internet network 12 as the phone network 12. SIP forms the signaling framework that carries all of the signaling messages used in a call. However, to enable the easy development of new services, RFC-3261 does NOT define exactly what is contained within these signaling messages. To enable interoperability between various SIP devices, RFC-3264 was developed at the same time as RFC-3261. RFC-3264 is titled "An Offer/Answer model with SDP". The most popular 'payload' carried within the SIP framework is the "Session Description Protocol" (SDP) which is defined in RFC-4566. These 3 RFC's (RFC-3261, RFC-3264, and RFC-4566) form the signaling basis for nearly every VoIP phone and many conferencing and phone systems. Although the SDP messages contain network 12 information about the media streams, they do NOT carry the actual audio and video streams themselves. The media streams are transported using the "Real Time transport Protocol" or RTP, which is defined in RFC-3550.

By following this technique, it significantly reduces the key generation overhead during key exchange operations. Also greatly reduced are the signaling messages that are exchanged whenever a key exchange process is performed. Since most VoIP signaling messages use SIP or IMS, all of these messages must travel though one or more SIP proxy servers. Every signaling message that can be eliminated eliminates many additional signaling messages between these proxies. In existing security key exchanges using multiple keys, a session involving a large group can result in thousands of updated key messages and many thousands of the resultant proxied messages.

A node herein can be a videophone, such as a viper sold by Ericsson Inc. (see patent application serial number 10/114,402).

### Abbreviations

*IMS - IP Multimedia Subsystem*

*SIP - Session Initiation Protocol*

### References

IETF: RFC3061, RFC3064, RFC3711, RFC4568

## Claims

1. A method for providing secure communications comprising the steps of:
sending a unique cryptographic media key by each party of N parties, where N is greater than or equal to three and is an integer, for each media stream of each party to every other party of a session over a telecommunications network;
distributing a master key to each party in the session;
encrypting by each party with its own respective media key and the master key each of its media streams;
sending by each party its encrypted media streams to the other parties;
adding a new party to the session;
sending by the new party its unique cryptographic media keys for each of its media streams to the other parties of the session;
generating a new master key with the media keys of the new party; and
distributing the new master key to the new party and the N parties using only a single signaling message to each of the N parties and the new party without any other signaling messages to establish secure communications between the new party and the N parties in the session.

2. A method as described in Claim 1 including the step of encrypting by each party with its own respective media key and the new master key each of its media streams.

3. A method as described in Claim 2 including the step of sending by each party its encrypted media streams using the new master key to the other parties.

4. A method as described in Claim 3 including designating one of the N parties as a key master.

5. A method as described in Claim 4 including the step of generating the master key by the key master.

6. A method as described in Claim 5 wherein the generating the new master key step includes the step of generating the new master key by the key master.

7. A method as described in Claim 6 including the step of disconnecting one of the N parties from the session so the new party and N -1 of the N parties remain in the session.

8. A method as described in Claim 7 including the step of generating another new master key by the key master.

9. A method as described in Claim 8 including the step of distributing the another new master key to the new party and the N - 1 parties.

10. A method as described in Claim 9 including the step of encrypting by each of the new party and the N -1 parties with their own respective media key and the another new master key each of their media streams.

11. A method as described in Claim 10 including the step of sending by each of the new party and the N -1 parties their respective encrypted media streams using the another new master key, to each other.

12. A system for providing secure communications comprising:
a telecommunications network;
N nodes and a new node adapted to be in communication with the network to form a session, where N is greater an or equal to three and is an integer, each node being adapted for having media streams, and a unique cryptographic media key for each media stream which each node is adapted to send to every other node of the session over the telecommunications network, one of the N nodes being adapted to be a key master which distributes a master key to every other node in the session over the network, each node being adapted to encrypt with its own respective media key and the master key each of its media streams; when the new node first joins the session, the new node being adapted to send its unique cryptographic media keys for each of its media streams to the N nodes of the session, the key master being adapted to then generate a new master key with the media key of the new node and distribute the new master key to the new node and the N nodes using only a single signaling message to each of the N nodes and the new node without any other signaling messages to establish secure communications between the new node and the N nodes in the session.

13. A system as described in Claim 12 wherein each node is adapted to encrypt with its own respective media key and the new master key each of its media streams after the new node first joins the session and sends its encrypted media streams using the new master key to the other nodes.

14. A system as described in Claim 13 wherein the key master generates the master key and the new master key.

## Patentansprüche

1. Verfahren zum Bereitstellen von sicheren Kommunikationen, die Schritte umfassend:
Senden eines eindeutigen kryptographischen Medienschlüssels durch jeden Teilnehmer von N Teilnehmern, wobei N größer oder gleich drei ist und eine Ganzzahl ist, für jeden Medienstrom von jedem Teilnehmer zu jedem anderen Teilnehmer einer Sitzung über ein Telekommunikationsnetz;
Verteilen eines Hauptschlüssels zu jedem Teilnehmer in der Sitzung;
Verschlüsseln, durch jeden Teilnehmer, jeder seiner Medienströme mit seinem eigenen jeweiligen Medienschlüssel und dem Hauptschlüssel;
Senden, durch jeden Teilnehmer, dessen verschlüsselte Medienströme zu den anderen Teilnehmern;
Hinzufügen eines neuen Teilnehmers zu der Sitzung;
Senden, durch den neuen Teilnehmer, dessen eindeutige kryptographische Medienschlüssel für jeden seiner Medienströme zu den anderen Teilnehmern der Sitzung;
Erzeugen eines neuen Hauptschlüssels mit den Medienschlüsseln des neuen Teilnehmers; und
Verteilen des neuen Hauptschlüssels an dem neuen Teilnehmer und den N Teilnehmern unter Verwendung nur einer einzelnen Signalisierungsnachricht zu jeder der N Teilnehmer und dem neuen Teilnehmer, ohne andere Signalisierungsnachrichten, um sichere Kommunikationen zwischen dem neuen Teilnehmer und den N Teilnehmern in der Sitzung aufzubauen.

2. Verfahren nach Anspruch 1, beinhaltend den Schritt des Verschlüsselns, durch jeden Teilnehmer, jeder seiner Medienströme mit dessen eigenem jeweiligen Medienschlüssel und dem neuen Hauptschlüssel.

3. Verfahren nach Anspruch 2, beinhaltend den Schritt des Sendens, durch jeden Teilnehmer, dessen verschlüsselten Medienströmen unter Verwendung des neuen Hauptschlüssels zu den anderen Teilnehmer.

4. Verfahren nach Anspruch 3, beinhaltend Bestimmen eines der N Teilnehmer als einen Schlüsselverwalter.

5. Verfahren nach Anspruch 4, beinhaltend den Schritt des Erzeugens des Hauptschlüssels durch den Schlüsselverwalter.

6. Verfahren nach Anspruch 5, wobei der Schritt des Erzeugens des neuen Hauptschlüssels beinhaltet den Schritt des Erzeugens des neuen Hauptschlüssels durch den Schlüsselverwalter.

7. Verfahren nach Anspruch 6, beinhalten den Schritt des Trennens von einem der N Teilnehmer von der Sitzung, so dass der neue Teilnehmer und N-1 der N Teilnehmer in der Sitzung verbleiben.

8. Verfahren nach Anspruch 7, beinhaltend den Schritt des Erzeugens eines weiteren neuen Hauptschlüssels durch den Schlüsselverwalter.

9. Verfahren nach Anspruch 8, beinhaltend den Schritt des Verteilens des weiteren neuen Hauptschlüssels an den neuen Teilnehmer und die N-1 Teilnehmer.

10. Verfahren nach Anspruch 9, beinhaltend den Schritt des Verschlüsselns, durch jeden des neuen Teilnehmers und der N-1 Teilnehmer, jeder deren Medienströme mit deren eigenem jeweiligen Medienschlüssel und dem weiteren neuen Hauptschlüssel.

11. Verfahren nach Anspruch 10, beinhaltend den Schritt des Sendens, durch jede des neuen Teilnehmers und der N-1 Teilnehmer, deren jeweilige verschlüsselte Medienströme unter Verwendung des weiteren neuen Hauptschlüssels, zu einander.

12. System zum Bereitstellen sicherer Kommunikationen, umfassend:
ein Telekommunikationsnetz; und
N Knoten und einen neuen Knoten, die eingerichtet sind, um in Kommunikation mit dem Netz zu sein, um eine Sitzung zu bilden, wobei N größer oder gleich drei ist und eine Ganzzahl ist, jeder Knoten eingerichtet ist zum Aufweisen von Medienströmen, und ein eindeutiger kryptographischer Medienschlüssel für jeden Medienstrom, welcher jeder Knoten eingerichtet ist zum Senden zu jedem anderen Knoten der Sitzung über das Telekommunikationsnetz, einer der N Knoten eingerichtet ist, um ein Schlüsselverwalter zu sein, welcher einen Hauptschlüssel zu jedem anderen Knoten in der Sitzung über das Netz verteilt, jeder Knoten eingerichtet ist zum Verschlüsseln, mit dessen eigenem jeweiligen Medienschlüssel und dem Hauptschlüssel, jeder seiner Medienströme; wenn der neue Knoten erstmals die Sitzung betritt, der neue Knoten eingerichtet ist zum Senden dessen eindeutigen kryptographischen Medienschlüsseln für jeden seiner Medienströme zu den N Knoten der Sitzung, der Schlüsselverwalter eingerichtet ist, um dann einen neuen Hauptschlüssel mit dem Medienschlüssel des neuen Knotens zu erzeugen und den neuen Hauptschlüssel zu dem neuen Knoten und den N Knoten zu verteilen, unter Verwendung nur einer einzelnen Signalisierungsnachricht zu jedem der N Knoten und dem neuen Knoten, ohne eine andere Signalisierungsnachricht, um sichere Kommunikationen zwischen dem neuen Knoten und den N Knoten in der Sitzung herzustellen.

13. System nach Anspruch 12, wobei jeder Knoten eingerichtet ist zum Verschlüsseln, mit dessen eigenem jeweiligen Medienschlüssel und dem neuen Hauptschlüssel, jeder seiner Medienströme nachdem der neue Knoten erstmals die Sitzung betreten hat und seine verschlüsselten Medienströme unter Verwendung des neuen Hauptschlüssels zu den anderen Knoten sendet.

14. System nach Anspruch 13, wobei der Schlüsselverwalter den Hauptschlüssel und den neuen Hauptschlüssel erzeugt.

## Revendications

1. Procédé de fourniture de communications sécurisées, comprenant les étapes consistant à :
envoyer une clef cryptographique unique de contenu multimédia par chaque participant de N participants, N étant un entier égal ou supérieur à trois, pour chaque flux de contenu multimédia de chaque participant, à destination de tous les autres participants à une session sur un réseau de télécommunications ;
distribuer une clef maîtresse à chacun des participants à la session ;
chiffrer par chaque participant chacun de ses flux de contenu multimédia, à l'aide de sa propre clef de contenu multimédia et de la clef maîtresse ;
envoyer par chaque participant ses flux de contenu multimédia chiffrés vers les autres participants ;
ajouter un nouveau participant à la session ;
envoyer par le nouveau participant ses propres clefs cryptographiques uniques de contenu multimédia pour chacun de ses flux de contenu multimédia à destination des autres participants à la session ;
produire une nouvelle clef maîtresse avec les clefs de contenu multimédia du nouveau participant ; et
distribuer la nouvelle clef maîtresse au nouveau participant et aux N participants en utilisant un unique message de signalisation vers chacun des N participants et le nouveau participant, sans autres messages de signalisation pour établir des communications sécurisées entre le nouveau participant et les N participants à la session.

2. Procédé selon la revendication 1, comprenant l'étape consistant à chiffrer, par chaque participant, chacun de ses flux de contenu multimédia à l'aide de sa clef de contenu multimédia respective et de la nouvelle clef maîtresse.

3. Procédé selon la revendication 2, comprenant l'étape consistant à envoyer par chaque participant ses flux de contenu multimédia chiffrés aux autres participants, en utilisant la nouvelle clef maîtresse.

4. Procédé selon la revendication 3, comprenant l'étape consistant à désigner l'un des N participants comme maître des clefs.

5. Procédé selon la revendication 4, comprenant l'étape consistant à produire la clef maîtresse par le maître des clefs.

6. Procédé selon la revendication 5, dans lequel l'étape de production de la nouvelle clef maîtresse comprend l'étape consistant à produire la nouvelle clef maîtresse par le maître des clefs.

7. Procédé selon la revendication 6, comprenant l'étape consistant à déconnecter de la session l'un des N participants, afin que le nouveau participant et N - 1 des N participants restent dans la session.

8. Procédé selon la revendication 7, comprenant l'étape consistant à produire une autre nouvelle clef maîtresse par le maître des clefs.

9. Procédé selon la revendication 8, comprenant l'étape consistant à distribuer l'autre nouvelle clef maîtresse au nouveau participant et aux N - 1 participants.

10. Procédé selon la revendication 9, comprenant l'étape consistant à chiffrer, par le nouveau participant et chacun des N - 1 participants, chacun de leurs flux de contenu multimédia à l'aide de leur clef de contenu multimédia respective et de l'autre nouvelle clef maîtresse.

11. Procédé selon la revendication 10, comprenant l'étape consistant à s'envoyer réciproquement, par le nouveau participant et chacun des N - 1 participants, leurs flux de contenu multimédia chiffrés en utilisant l'autre nouvelle clef maîtresse.

12. Système destiné à fournir des communications sécurisées, comprenant :
un réseau de télécommunications ; et
N noeuds et un nouveau noeud conçus pour communiquer avec le réseau pour former une session, N étant un entier égal ou supérieur à trois, chaque noeud étant conçu pour avoir des flux de contenu multimédia, et une clef cryptographique unique de contenu multimédia pour chaque flux de contenu multimédia que chaque noeud est conçu pour envoyer à tous les autres noeuds de la session sur le réseau de télécommunications, un des N noeuds étant conçu pour être un maître des clefs qui distribue une clef maîtresse à tous les autres noeuds de la session sur le réseau, chaque noeud étant conçu pour chiffrer chacun de ses flux de contenu multimédia à l'aide de sa propre clef de contenu multimédia respective et de la clef maîtresse ; lorsque le nouveau noeud se joint à la session pour la première fois, le nouveau noeud est conçu pour envoyer aux N noeuds de la session ses clefs cryptographiques uniques de contenu multimédia pour chacun de ses flux de contenu multimédia, le maître des clefs est conçu pour produire alors une nouvelle clef maîtresse avec la clef de contenu multimédia du nouveau noeud et pour distribuer la nouvelle clef maîtresse au nouveau noeud et aux N noeuds en utilisant seulement un unique message de signalisation vers chacun des N noeuds et vers le nouveau noeud, sans aucun autre message de signalisation pour établir des communications sécurisées entre le nouveau noeud et les N noeuds de la session.

13. Système selon la revendication 12, dans lequel chaque noeud est conçu pour chiffrer chacun de ses flux de contenu multimédia à l'aide de sa propre clef de contenu multimédia respective et de la nouvelle clef maîtresse après que le nouveau noeud s'est pour la première fois joint à la session et pour envoyer aux autres noeuds ses flux de contenu multimédia chiffrés à l'aide de la nouvelle clef maîtresse.

14. Système selon la revendication 13, dans lequel le maître des clefs produit la clef maîtresse et la nouvelle clef maîtresse.
